# EUROPEAN PATENT APPLICATION

(11) **EP 4 813 693 A1**
(43) Date of publication of application: **30.09.2026**
(21) Application number: 26159785.0
(22) Date of filing: 20.02.2026
(51) Int. Cl.: B60K 1/04, H01M 50/24, H01M 50/249

(54) **VEHICLE REAR SECTION STRUCTURE**

(30) Priority: 26.03.2025 JP 2025052175
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); YONEZAWA, Shota, Toyota-shi, Aichi-ken, 471-8571 (JP)
(74) Representative: TBK

(57) **Abstract**

A vehicle rear section structure is configured including: a pedestal that is provided at a vehicle front-rear direction rear end portion side of a lower case configuring a lower section of a battery case and that is arranged further upward than a lower face of the lower case; a breathable membrane that is provided to the pedestal, with the breathable membrane enabling communication between the inside of the battery case and the outside of a vehicle and regulating pressure inside the battery case; and a wall that is provided to the pedestal, with the wall arranged further to the vehicle front side than the breathable membrane and projecting further upward than the breathable membrane.

## Description

### BACKGROUND

### Technical Field

The present disclosure relates to a vehicle rear section structure.

### Related Art

Technology related to a vehicle installed with a power storage device is disclosed in Japanese Patent Application Laid-Open (JP-A) No. 2024-171053. In this related art, a breathable membrane is provided to an upper case configuring an upper section of a battery case housing a battery module, enabling pressure inside the battery module to be regulated.

Due to the breathable membrane being provided to the upper case in the manner described in the above related art, infiltration of water to inside the battery case can be prevented even supposing the breathable membrane were to be damaged.

### SUMMARY

There is, however, a need to provide a gap at the upper side of the upper case (hereafter referred to as "upper cover"), with the possibility that the space at the inside of a vehicle cabin provided above the battery case is narrowed by a commensurate amount.

In consideration of the above circumstances, an object of the present invention is to obtain a vehicle rear section structure capable of suppressing infiltration of water to inside a battery case even supposing a breathable membrane were to be damaged, while still securing space inside a vehicle cabin.

A vehicle rear section structure of a first aspect is configured including: a pedestal that is provided at a side of a rear end portion, in a vehicle front-rear direction, of a lower case configuring a lower section of a battery case, and that is disposed further upward than a lower face of the lower case; a breathable membrane that is provided at the pedestal, the breathable membrane enabling communication between an interior of the battery case and an exterior of a vehicle and regulating pressure inside the battery case; and a wall that is provided at the pedestal, the wall being disposed further to a vehicle front side than the breathable membrane and projecting further upward than the breathable membrane.

The pedestal is provided in the vehicle rear section structure according to the first aspect. This pedestal is provided at a side of a rear end portion, in the vehicle front-rear direction of the lower case configuring the lower section of the battery case, and is arranged further upward than the lower face of the lower case. The breathable membrane and the wall are also provided at the pedestal.

The breathable membrane enables communication between the inside of the battery case and the outside of a vehicle and enables regulation of pressure inside the battery case. Namely, the breathable membrane is able to discharge air from inside the battery case to outside through the breathable membrane when the internal pressure of the battery case rises, and air is able to inflow from outside the battery case to inside through the breathable membrane when the internal pressure of the battery case falls.

In the present aspect, the breathable membrane is provided to the pedestal, which is provided at the vehicle front-rear direction rear end portion side of the lower case configuring the lower section of the battery case and is arranged further upward than the lower face of the lower case. This means that in the present aspect a greater space is secured inside a vehicle cabin than cases in which the breathable membrane is provided at the upper cover side.

Moreover, the wall is arranged further to the vehicle front side than the breathable membrane and projects further upward than the breathable membrane. Due to the wall being provided in this manner projecting further upward than the breathable membrane at the vehicle front side of the breathable membrane, even supposing the breathable membrane were to be damaged, water that had infiltrated through the breathable membranes would still be blocked by the wall. As a result thereof, the present aspect is able to suppress the infiltration of water into the battery case.

A vehicle rear section structure according to a second aspect is the vehicle rear section structure according to the first aspect, wherein the breathable membrane is provided further to an outer side in the vehicle width direction and an upper side in a vehicle height direction than a smoke discharge vent for discharging smoke generated inside the battery case.

In the vehicle rear section structure according to the second aspect, the breathable membrane is placed back away from the smoke discharge channel including the smoke discharge vent by providing the breathable membrane further to the vehicle width direction outside and the vehicle height direction upper side than the smoke discharge vent for discharging smoke generated inside the battery case, enabling damage to the breathable membrane to be suppressed.

A vehicle rear section structure according to a third aspect is the vehicle rear section structure according to either the first aspect or the second aspect, wherein plural of the breathable membranes are provided.

In the vehicle rear section structure according to the third aspect, due to providing the plural breathable membranes, even supposing one of the breathable membranes were to be damaged, the pressure inside the battery case can still be regulated by another breathable membrane.

A vehicle rear section structure according to a fourth aspect is the vehicle rear section structure according to any one aspect of the first aspect to the third aspect, wherein the breathable membrane is configured from a material imparted with both waterproofing and breathable properties.

In the vehicle rear section structure according to the fourth aspect, due to the breathable membrane being configured from the material imparted with both waterproofing and breathable properties, the breathable membrane is able to suppress water vapor appearing as dew outside the vehicle from ingressing to inside the battery case.

A vehicle rear section structure according to a fifth aspect is the vehicle rear section structure according to any one aspect of the first aspect to the fourth aspect, wherein the wall is formed in a substantially circular arc shape in plan view so as to surround the breathable membrane from a front side in the vehicle front-rear direction and both sides in a vehicle width direction.

In the vehicle rear section structure according to the fifth aspect, due to the wall being formed configuring a substantially circular arc shape in plan view so as to surround the breathable membrane from the vehicle front-rear direction front side and both vehicle width direction sides, the breathable membrane is surrounded by the wall at a periphery of the breathable membrane, except for at a vehicle front-rear direction rear side thereof. This thereby enables water to be better suppressed from infiltrating inside the battery case by the wall, even supposing the breathable membrane were to be damaged.

As described above, the vehicle rear section structure according to the present invention is capable of suppressing infiltration of water to inside a battery case even supposing a breathable membrane were to be damaged, while still securing space inside a vehicle cabin.

### BRIEF DESCRIPTION OF THE DRAWINGS

Exemplary embodiments of the present disclosure will be described in detail based on the following figures, wherein:
Fig. 1 is a schematic plan view illustrating a vehicle rear section structure according to an exemplary embodiment;
Fig. 2 is a schematic perspective view illustrating a storage battery pack provided to the vehicle rear section structure according to the present exemplary embodiment;
Fig. 3 is a schematic cross-section of the vehicle rear section structure illustrated in Fig. 1, sectioned along a vehicle front-rear direction;
Fig. 4 is a schematic cross-section of the vehicle rear section structure illustrated in Fig. 1, sectioned along a vehicle width direction;
Fig. 5 is a schematic cross-section of the vehicle rear section structure illustrated in Fig. 1, sectioned along line A-A;
Fig. 6 is a partial enlarged cross-section illustrating an enlargement of part of Fig. 4;
Fig. 7 is an enlarged perspective view of an enlargement of relevant portions of the vehicle rear section structure according to the present exemplary embodiment; and
Fig. 8 is a schematic cross-section of the vehicle rear section structure illustrated in Fig. 1, sectioned along line B-B.

### DETAILED DESCRIPTION

Description follows regarding a vehicle rear section structure according to an exemplary embodiment of the present invention, with reference to the drawings. Note that the same or similar reference numerals are appended to the same or equivalent members across the drawings, and duplicate explanation thereof will be omitted. Moreover, in cases in which there are plural of the same or equivalent members contained in the drawings, sometimes reference numerals will only be appended to some thereof to facilitate reading of the drawings. Furthermore, as appropriate in the drawing, an arrow FR indicates forward in a vehicle front-rear direction, and an arrow UP indicates upward in a vehicle height direction. Arrow RH indicates rightwards in a vehicle width direction, and indicates the vehicle width direction outside in the present exemplary embodiment. In the following, front and rear, up and down, left and right directions stated alone indicate, unless explicitly stated otherwise, front and rear in the vehicle front-rear direction, up and down in the vehicle height direction, and left and right in the vehicle left-right direction (vehicle width direction).

### Vehicle Rear Section Structure Configuration

First description follows regarding a configuration of a vehicle rear section structure according to the present exemplary embodiment.

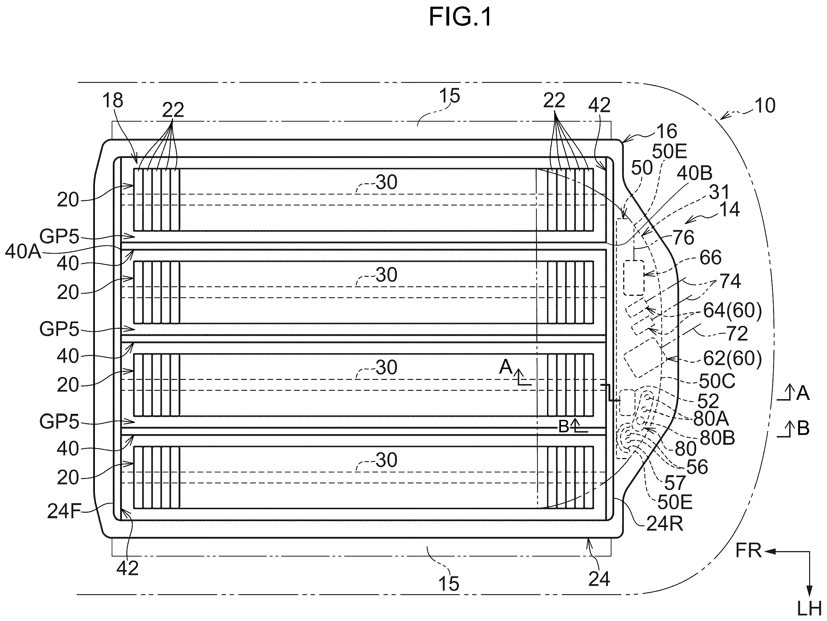

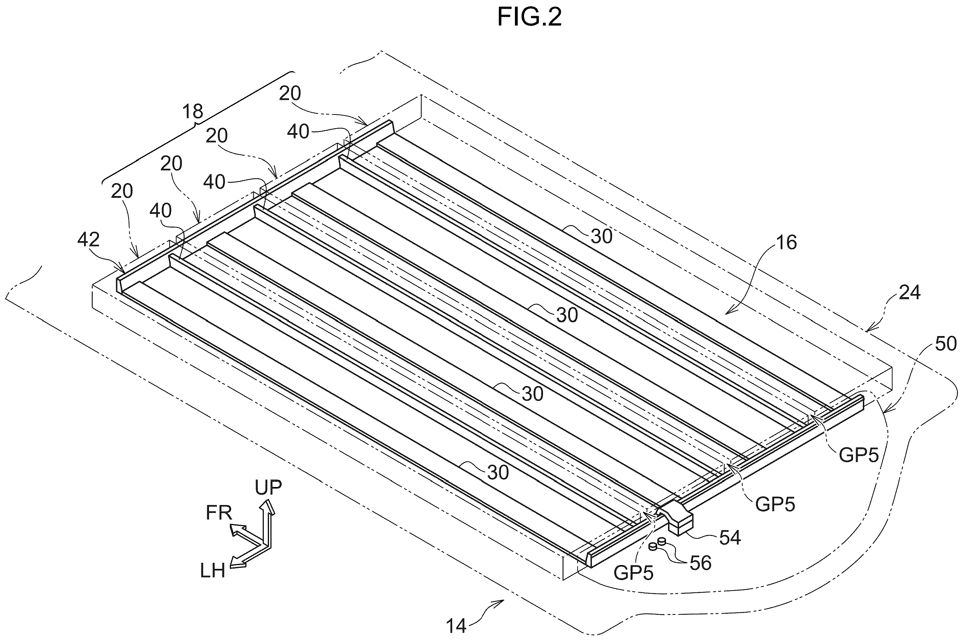

Fig. 1 is a schematic plan view partially illustrating a vehicle 10 including a vehicle rear section structure 14 of the present exemplary embodiment. Fig. 2 is a schematic perspective view illustrating a storage battery pack (battery case) 18 installed to the vehicle lower section 10.

As illustrated in Fig. 1, the storage battery pack 18 installed to the vehicle 10 includes plural (four in the present exemplary embodiment) storage battery modules (battery modules) 20, as illustrated in Fig. 2, with these storage battery modules 20 arranged alongside each other in the vehicle width direction. Moreover, gaps GP5 are configured between adjacent of the storage battery modules 20 in the vehicle width direction. There are four of the storage battery modules 20 in the present exemplary embodiment, and so this means that there are three of the gaps GP5 configured between the storage battery modules 20.

Moreover, as illustrated in Fig. 1, the storage battery modules 20 each include plural storage battery cells 22. The plural storage battery cells 22 are arranged in the storage battery modules 20 in a row along the vehicle front-rear direction. Namely, the storage battery pack 18 is configured by plural storage battery modules 20 arranged in a row along the vehicle width direction, with each of the storage battery modules 20 including plural storage battery cells 22 arranged in a row along the vehicle front-rear direction.

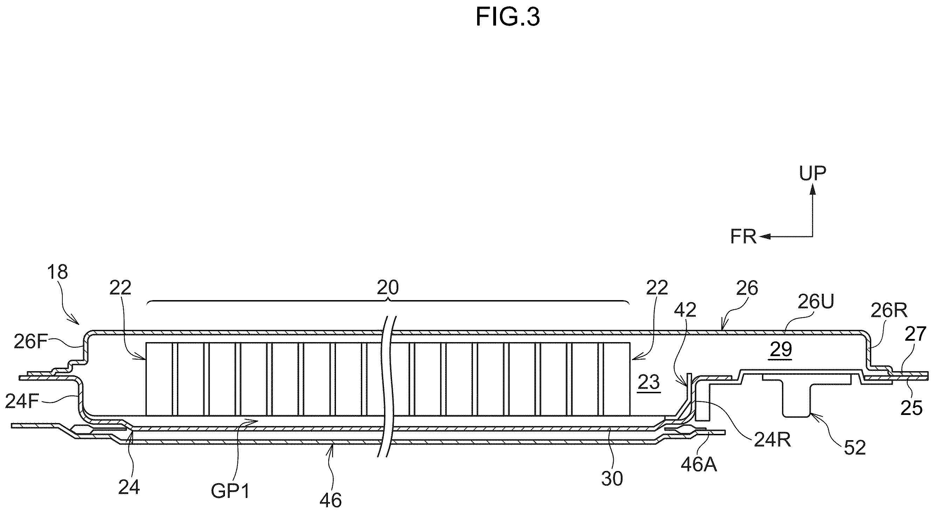

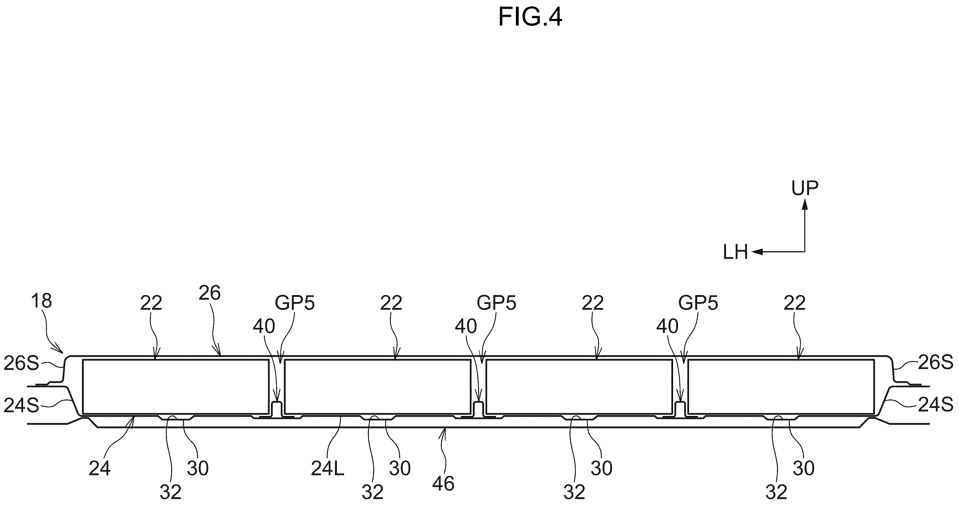

Fig. 3 is a cross-section sectioning the vehicle rear section structure 14 illustrated in Fig. 1 along the vehicle front-rear direction, and Fig. 4 is a cross-section sectioning the vehicle rear section structure 14 illustrated in Fig. 1 along the vehicle width direction. As illustrated in Fig. 3 and Fig. 4, the storage battery pack 18 includes a lower case 24 and an upper cover 26. Note that the upper cover 26 is omitted from illustration in Fig. 1 and Fig. 2.

As illustrated in Fig. 3 and Fig. 4, the lower case 24 is a member provided with a box-shaped housing section 23 capable of housing the storage battery modules 20, and is configured including a lower plate 24L, a front plate 24F, a rear plate 24R, and a left-right pair of side plates 24S. The lower plate 24L is a plate-shaped region that supports the storage battery modules 20 from below. The front plate 24F and the rear plate 24R are each plate-shaped regions provided so as to project upward respectively from a front end portion or a rear end portion of the lower plate 24L, and the side plates 24S are plate-shaped regions provided so as to project upward from the two vehicle width direction sides of the lower plate 24L. The upper face of the lower case 24 is open, and a flange 25 extends from a peripheral edge of the lower case 24 outward toward the outside of the housing section 23.

Note that a share panel 46 that extends in both the vehicle front-rear direction and the vehicle width direction is provided below the storage battery pack 18. The share panel 46 is formed by a metal sheet, such as an aluminum alloy sheet, steel sheet, or the like, and is connected to a pair of rockers 15 (see Fig. 1) that extend in the vehicle front-rear direction further to the two vehicle width direction outsides than the storage battery pack 18, so as to configure a single vehicle framework member. This means that the lower face of the storage battery pack 18 is covered by the share panel 46, and the storage battery modules 20 are protected by the share panel 46 from foreign objects and the like coming from the road surface.

Moreover, the upper cover 26 is a lid-shaped member closing off the upper face of the lower case 24, and is formed so as to contain the housing section 23, which is configured by the lower case 24 together with the upper cover 26. The upper cover 26 is configured similarly to the lower case 24, and is configured including an upper plate 26U, a front plate 26F, a rear plate 26R, and a left-right pair of side plates 26S. Note that the upper plate 26U is a plate-shaped region covering the storage battery modules 20 from above.

Moreover, the lower face of the upper cover 26 is open, and a flange 27 extends from a peripheral edge of the upper cover 26 toward the outside of the housing section 23. The flange 27 can be joined in an abutted state to the flange 25 formed to the lower case 24, and the storage battery pack 18 is configured by the lower case 24 and the upper cover 26.

At a rear end portion of the lower case 24, the rear plate 24R is arranged further to the front side than the rear plate 26R of the upper cover 26, with the surface area of the flange 25 being larger than the surface area of the flange 27 of the upper cover 26. A gap 29 is provided between a rear end portion of the upper plate 26U of the upper cover 26 and the flange 25 of the lower case 24, with the gap 29 being in communication with the housing section 23.

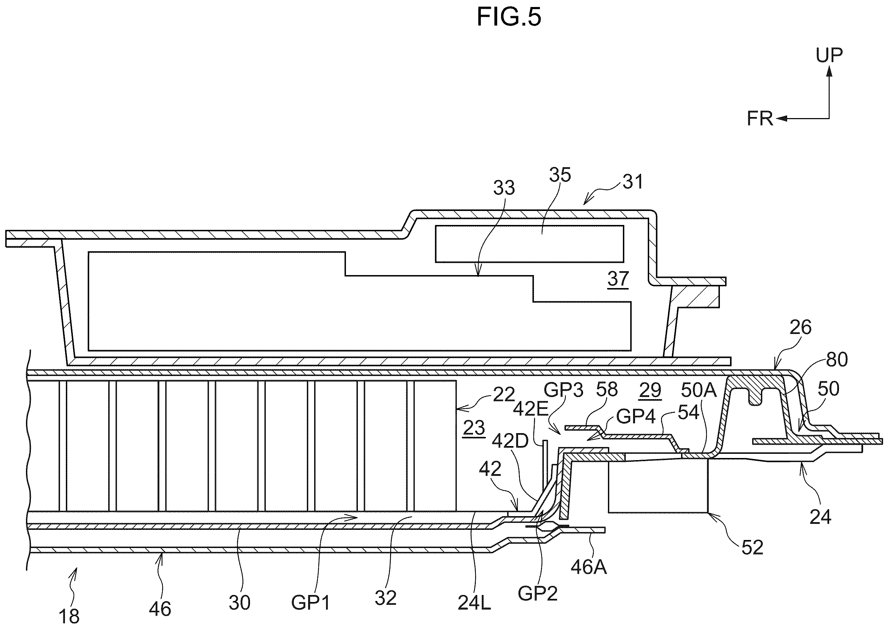

Fig. 5 is a schematic cross-section sectioned along line A-A of Fig. 1. Note that although an equipment case 31 is illustrated by broken lines in Fig. 1, the equipment case 31 is illustrated by solid lines in Fig. 5 in order to facilitate reading of the drawings.

As illustrated in Fig. 5, the equipment case 31 is arranged above a rear end portion of the upper cover 26. A relay, a junction box 33 housing auxiliary equipment and the like, an ECU 35, and the like are arranged inside the equipment case 31. The relay and auxiliary equipment are coupled to the storage battery modules 20 by a wiring pipe 88, described later, such as a harness, and are electrically connected to the storage battery modules 20.

Moreover, a non-illustrated opening is formed in a rear end portion of the upper cover 26. An internal space 37 of the equipment case 31 illustrated in Fig. 5, and the gap 29 of the storage battery pack 18 and the housing section 23, are in communication with each other through this opening.

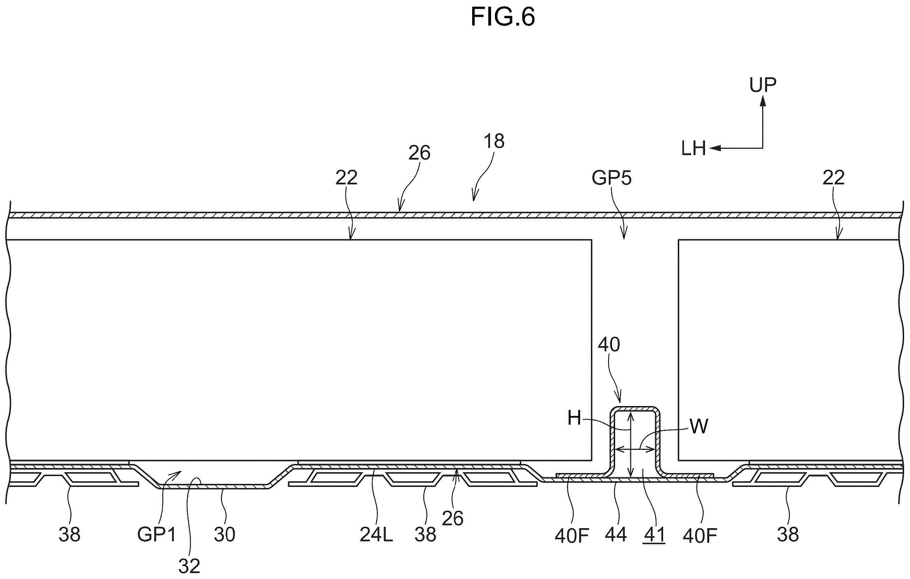

Fig. 6 is a partial enlarged cross-section illustrating an enlargement of part of Fig. 4 and, as illustrated in Fig. 4 and Fig. 6, plural (the same number as the number of storage battery modules 20) downward protrusions 30 are formed to the lower plate 24L of the lower case 24. The downward protrusions 30 each project downward at a vehicle width direction central position of the respective storage battery module 20. Namely, the lower case 24 is separated from the lower face of the storage battery cells 22 at the downward protrusions 30, and gaps GP1 are configured thereby.

Moreover, the downward protrusions 30 are formed at the storage battery modules 20 so as to extend in the vehicle front-rear direction, namely, so as to extend in the array direction of the storage battery cells 22. The vehicle front-rear direction length of the downward protrusions 30 is formed longer than the vehicle front-rear direction length of the storage battery modules 20, with the downward protrusions 30 extending contiguously in the vehicle front-rear direction from the vicinity of the front plate 24F to the vicinity of the rear plate 24R of Fig. 3.

Gaps GP1 where there is a separation from the lower face of the storage battery cells 22 due to the downward protrusions 30 accordingly extend in the vehicle front-rear direction, with the gaps GP1 configuring part of a smoke discharge channel 32. The storage battery cells 22 are configured such that, when a gas containing smoke (hereafter such a gas is simply referred to as "smoke") has been generated for some reason or other, the smoke is discharged from a vehicle width direction central position on the lower face of the storage battery cell 22. This means that smoke generated in the storage battery cells 22 flows into the gaps GP1 configured by the downward protrusions 30. The smoke discharge channel 32, as described below, is provided contiguously from the gaps GP1 to the gap GP4, and guides the generated smoke efficiently to a smoke discharge vent 52.

Note that coolers 38 are respectively provided along the vehicle front-rear direction at the two vehicle width direction sides of the downward protrusions 30 in the lower plate 24L of the lower case 24. The coolers 38 configure coolant channels extending along the vehicle front-rear direction, with the heat of the coolers 38 being transmitted to coolant flowing in the coolant channels, cooling the storage battery cells 22, and enabling excessive heating of the storage battery cells 22 to be suppressed.

As illustrated in Fig. 1, a reinforcement member 40 is respectively arranged on the lower plate 24L of the lower case 24 in each of the gaps GP5 between the storage battery modules 20. A cell pedestal 44 is formed at a position where the reinforcement member 40 is provided, with the cell pedestal 44 formed as a downward protrusion on the lower plate 24L of the lower case 24 at a position where the reinforcement member 40 is arranged.

As illustrated in Fig. 6, the reinforcement member 40 is configured with a substantially hat-shaped cross-section profile opening downwards in cross-section profile sectioned along the vehicle width direction, and a flange plate 40F of the reinforcement member 40 is joined to the cell pedestal 44. The opening portion at the lower side of the reinforcement member 40 is thereby closed off, such that a closed-cross-section section 41 is formed to the reinforcement member 40. Note that the reinforcement member 40 has a greater height dimension H than width dimension W.

The reinforcement members 40 are formed with the pre-set width dimension W inside the gaps GP5 provided between the storage battery modules 20 adjacent in the vehicle width direction. Setting the height dimension H of the reinforcement members 40 greater than the width dimension W enables a second moment of area to be raised in the reinforcement members 40 compared to cases in which the height dimension H is set to the same size as the width dimension W, enabling deformation to be suppressed.

Moreover, as illustrated in Fig. 1, the reinforcement members 40 each have a length reaching to the vicinity of the front plate 24F and to the vicinity the rear plate 24R of the lower case 24. The front end 40A and the rear end 40B of the reinforcement member 40 are joined to the front plate 24F and the rear plate 24R of the lower case 24 by respective joining members 42. The reinforcement members 40 thereby reinforce the storage battery pack 18.

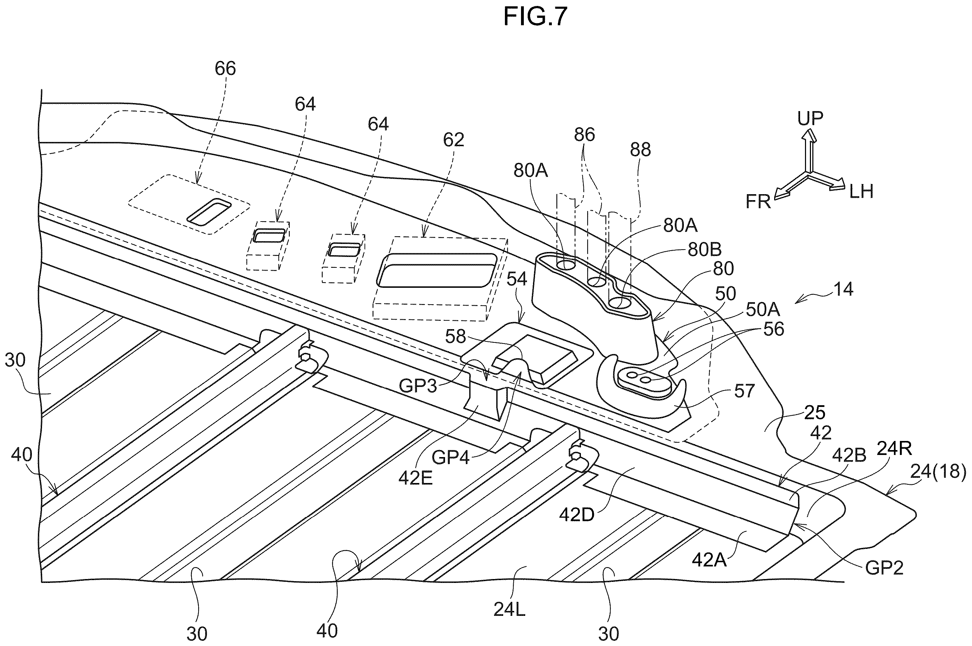

Fig. 7 is a perspective view of the rear plate 24R side of the lower case 24. As illustrated in Fig. 7, the joining member 42 includes a first separation section 42D for achieving a separation from the rear plate 24R of the lower case 24 between a join face 42A making face-to-face contact with the lower plate 24L of the lower case 24, and a join face 42B making face-to-face contact with the rear plate 24R of the lower case 24. The first separation section 42D is formed inclined when viewed in vehicle front-rear direction cross-section, with a gap GP2 generated between the first separation section 42D and the rear plate 24R of the lower case 24. The gap GP2 is contiguous in the vehicle width direction, and is in communication with the gaps GP1 between the lower face of the storage battery cells 22 and the downward protrusions 30. Namely, the gap GP2 configures part of the smoke discharge channel 32.

The front end 40A and the rear end 40B of each of the reinforcement members 40 illustrated in Fig. 1 are open, and are in communication with the gap GP2 illustrated in Fig. 7. Namely, the closed-cross-section sections 41 configured by the reinforcement members 40 and the cell pedestals 44 are in communication with the gap GP2 illustrated in Fig. 7, and configure part of the smoke discharge channel 32.

As illustrated in Fig. 7, a connector block (pedestal) 50 is provided to the flange 25 provided at the rear end portion of the lower case 24. A first connector 62 made from metal, second connectors 64 made from resin, and a third connector 66 made from metal are, for example, arranged at a lower face side of the connector block 50, including the vehicle width direction center thereof. A first wire 72 is connected to the first connector 62, and second wires 74 are connected to the second connector 64. A third wire 76 is connected to the third connector 66. As an example, the first wire 72 and the third wire 76 are wires through which current flows at a higher voltage than the second wires 74.

As illustrated in Fig. 1, a front edge (vehicle front side edge) of the connector block 50 has a straight line profile along the vehicle width direction. A rear edge (vehicle rear side edge) of the connector block 50 is curved so as to be convex toward the vehicle rear at a vehicle width direction center thereof. Namely, a vehicle width direction central portion 50C of the connector block 50 is formed longer in the vehicle front-rear direction than the two vehicle width direction end portions 50E thereof.

Moreover, as illustrated in Fig. 1, Fig. 5, Fig. 7, a smoke discharge vent 52 is provided at the vehicle width direction outside of the connector block 50. A cover plate 54 spanning from the storage battery pack 18 across to the smoke discharge vent 52 is attached to the connector block 50, and configures part of the smoke discharge channel 32 between itself and the connector block 50.

An upward protrusion 58 is formed to the cover plate 54. The upward protrusion 58 has a profile in which a vehicle width direction central portion thereof is curved upward in the vicinity of the vehicle front side thereof. A gap GP4 is configured between the cover plate 54 and the connector block 50 by the upward protrusion 58 being formed to the cover plate 54. This gap GP4 enables smoke to move in the vehicle front-rear direction, and configures part of the smoke discharge channel 32.

Moreover, a second separation section 42E is provided to the joining member 42 that is joined to the rear plate 24R of the lower case 24. The second separation section 42E is formed at a position corresponding to the upward protrusion 58 in the vehicle width direction. The second separation section 42E is separated from the rear plate 24R of the lower case 24, and is contiguous to the first separation section 42D. A gap GP3 is configured between the second separation section 42E and the rear plate 24R of the lower case 24.

This means that the smoke discharge channel 32 inside the storage battery pack 18 is formed so as to be contiguous from the gaps GP1, between the lower face of the storage battery cells 22 and the downward protrusions 30, to the smoke discharge vent 52, via the gap GP2 between the second separation section 42E and the rear plate 24R of the lower case 24, via the gap GP3 between the second separation section 42E and the rear plate 24R of the lower case 24, and via the gap GP4 between the cover plate 54 and the lower case 24.

The smoke discharge vent 52 is configured so as to perform valve-opening when the internal pressure of the smoke discharge channel 32 is at least a specific value higher than the externally air pressure of the smoke discharge channel 32. Namely, the smoke discharge vent 52 performs valve-opening when the internal pressure from smoke flowing into the smoke discharge channel 32 has risen to the specific value or higher, and internal gas of the smoke discharge channel 32 is discharged externally.

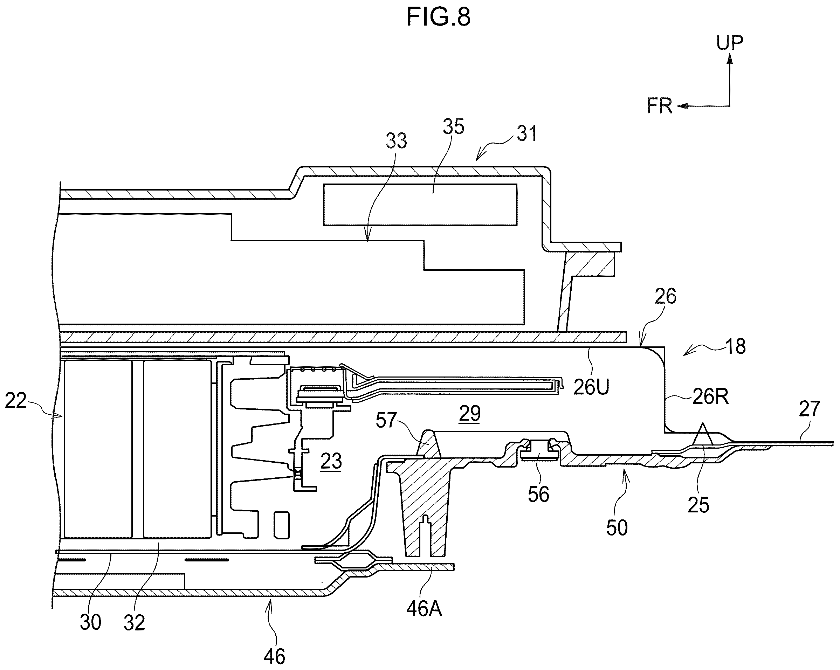

Furthermore, in the present exemplary embodiment, as illustrated in Fig. 7, breathable membranes 56 are attached to the connector block 50. Fig. 8 is a schematic cross-section sectioned along line B-B of Fig. 1. As illustrated in Fig. 8, the breathable membranes 56 enable communication with the gap 29 provided between the upper plate 26U of the upper cover 26 and the flange 25 of the lower case 24. Note that this gap 29 is in communication with the housing section 23 housing the storage battery modules 20.

Namely, the breathable membranes 56 are provided so as to enable communication between the inside the storage battery pack 18 and the vehicle exterior, enabling the pressure inside the storage battery pack 18 to be regulated. More specifically, air from inside the storage battery pack 18 is able to be discharged externally through the breathable membranes 56 when the internal pressure of the storage battery pack 18 rises, and air external to the storage battery pack 18 is able to inflow inside through the breathable membranes 56 when the internal pressure of the storage battery pack 18 falls.

Moreover, in the present exemplary embodiment, the breathable membranes 56 are configured so as to enable gas to pass through but to prevent liquids (including vapor) from passing through, and, as a material thereof, GorTex (registered trademark) or the like is, for example, employed therefor. Even in cases in which gas passes through, the breathable membranes 56 act to resist movement of gas, and are formed such that gas does not move through all at once in a short period of time.

Moreover, in the present exemplary embodiment, the breathable membranes 56 allow movement of gas with respect to the smoke discharge channel 32, and prevent the movement of liquid. For example, in cases in which the vehicle 10 has travelled to a location with a different external pressure (a high altitude area, as an example), this results in a larger pressure difference between the internal pressure of the smoke discharge channel 32 and the atmospheric pressure. Such a pressure difference can be alleviated by air passing through the breathable membranes 56 in such cases.

Furthermore, in the present exemplary embodiment, plural (two) breathable membranes 56 are provided, with the breathable membranes 56 being arranged along the vehicle width direction, as illustrated in Fig. 7. Moreover, the breathable membranes 56 are provided further to the vehicle width direction outside and vehicle height direction upper side than the smoke discharge vent 52.

In the present exemplary embodiment, a wall 57 is provided to the connector block 50 at a vehicle front side of the breathable membranes 56, as illustrated in Fig. 7 and Fig. 8. The wall 57 is formed configuring a substantially circular arc shape in plan view so as to surround the breathable membranes 56 from the vehicle front-rear direction front side and the both vehicle width direction sides. The wall 57 is configured with a substantially triangular profile in cross-section profile sectioned along its width direction substantially orthogonal to its length direction, and is formed so as to project further upward than the breathable membranes 56.

Moreover, a routing block 80 projects upward from the connector block 50 further to the vehicle rear side than the smoke discharge vent 52 and the breathable membranes 56.

The routing block 80 is formed so as to project from an upper face 50A of the connector block 50 further upward than the smoke discharge vent 52 and the breathable membranes 56. Moreover, the routing block 80 is configured with a profile longer in the vehicle width direction than in the vehicle front-rear direction when viewed from above the vehicle, and is provided at an outer edge side of the connector block 50.

Furthermore, the routing block 80 is formed in a substantially truncated cone shape when viewed from the vehicle outside, with a horizontal direction cross-section profile that increases on progression toward the vehicle lower side. Circular shaped first insertion holes 80A and second insertion hole 80B are formed at the inside of the routing block 80, penetrating through the connector block 50 in the height direction. In the present exemplary embodiment, circulation pipes 86 to circulate cooling water to equipment installed in the vehicle are, for example, inserted into the first insertion holes 80A. The wiring pipe 88 for housing plural wires for transmitting electrical signals to the installed equipment is inserted through the second insertion hole 80B.

### Vehicle Rear Section Structure Operation and Advantageous Effects

Next, description follows regarding the operation and advantageous effects of the vehicle rear section structure according to the present exemplary embodiment.

In the vehicle 10 applied with the vehicle rear section structure 14 according to the present exemplary embodiment as illustrated in Fig. 1, the storage battery modules 20 are each configured by the plural storage battery cells 22. The storage battery cells 22 are arranged in the storage battery modules 20 alongside each other in the vehicle front-rear direction, and the storage battery modules 20 are arranged alongside each other in the vehicle width direction.

This thereby enables the plural storage battery cells 22 to be efficiently arranged in the vehicle front-rear direction and the vehicle width direction. In particular, due to the array direction of the storage battery cells 22 in the storage battery modules 20 being the vehicle front-rear direction, the number of the storage battery cells 22 that can be placed in a single row is increased in comparison to configurations in which the storage battery cells 22 are arrayed in the vehicle width direction.

Although smoke is not generated in a normal state of the storage battery cells 22 illustrated in Fig. 5, in cases in which smoke has been generated for some reason or other, the smoke is discharged from a vehicle width direction central position on the lower face of the storage battery cells 22. This smoke then flows out to inside the gaps GP1, which are provided between the downward protrusions 30 of the lower case 24 of the storage battery pack 18 and the lower face of the storage battery cells 22. This smoke then also flows to the smoke discharge vent 52, via the inside of the gap GP2 and inside the gap GP3 respectively provided at the rear plate 24R side of the lower case 24, and via the inside of the gap GP4 provided between the cover plate 54 respectively provided at the rear end portion of the lower case 24 and the connector block 50. The gaps GP1 to GP4 each configure part of the smoke discharge channel 32, and the smoke is discharged from the smoke discharge vent 52 when the internal pressure of the smoke discharge channel 32 has risen to higher than the external pressure.

In the present exemplary embodiment, the vehicle rear section structure 14 is provided with the connector block 50, and the connector block 50 is configured including the breathable membranes 56 and the wall 57. The connector block 50 is provided at the rear end portion side of the lower case 24 configuring a lower section of the storage battery pack 18, and is arranged further upward than the lower face of the lower case 24.

In the present exemplary embodiment, the connector block 50 is provided further to the rear end portion side of the lower case 24 of the storage battery pack 18 and further upward than the lower face of the lower case 24, and the breathable membranes 56 are provided to the connector block 50. This thereby enables more space to be secured inside a vehicle cabin than, for example, cases in which the breathable membranes 56 are provided on the upper cover 26 side.

The wall 57 is arranged further to the vehicle front side than the breathable membranes 56, and projects further upward than the breathable membranes 56. Due to the wall 57 being provided in this manner at the vehicle front side of the breathable membranes 56 so as to project further upward than the breathable membranes 56, even suppose that the breathable membranes 56 were to be damaged, then any water infiltrating through the breathable membranes 56 would be blocked by the wall 57. As a result thereof, the present exemplary embodiment enables the infiltration of water into the storage battery pack 18 to be suppressed.

Moreover, in the present exemplary embodiment, the wall 57 is formed configuring a substantially circular arc shape in plan view so as to surround the breathable membranes 56 from the vehicle front-rear direction front side and the both vehicle width direction sides, and is provided projecting further upward than the breathable membranes 56.

As described above, the cover plate 54 is provided to the connector block 50, and the gap GP4 is formed between the upward protrusion 58 formed to the cover plate 54 and the connector block 50. Moreover, the gap GP3 is formed between the second separation section 42E of the joining member 42 joined to the rear plate 24R of the lower case 24 and the rear plate 24R of the lower case 24. Furthermore, the gap GP2 is formed between the first separation section 42D of the joining member 42 and the rear plate 24R of the lower case 24, with the gap GP2 in communication with the gaps GP1 formed between the lower face of the storage battery cells 22 and the downward protrusions 30. Namely, were any water to infiltrate inside the gap GP4, then this could possibly lead to water infiltrating through the gap GP4 to inside the storage battery pack 18 (and in particular to inside the storage battery cells 22).

Thus in the present exemplary embodiment, due to the wall 57 being formed configuring a substantially circular arc shape in plan view so as to surround the breathable membranes 56 from the vehicle front-rear direction front side and both vehicle width direction sides, this means that the periphery of the breathable membranes 56 is surrounded by the wall 57, except for at the vehicle front-rear direction rear side of the breathable membranes 56. Accordingly, even supposing that the breathable membranes 56 were to be damaged, the infiltration of water to the gap GP4 side is suppressed by the wall 57, enabling a configuration such that water does not infiltrate inside the storage battery pack 18.

Note that although in the present exemplary embodiment the wall 57 is formed configuring a substantially circular arc shape in plan view so as to surround the breathable membranes 56 from the vehicle front-rear direction front side and both vehicle width direction sides, a configuration may be adopted in which the wall 57 is provided so as to include at least a portion disposed between the breathable membranes 56 and the gap GP4. Moreover, the rigidity of the connector block 50 itself is raised by providing the wall 57 to the connector block 50.

Moreover, in the present exemplary embodiment, the breathable membranes 56 are provided further to the vehicle width direction outside and vehicle height direction upper side than the smoke discharge vent 52. This means that in the present exemplary embodiment the breathable membranes 56 are placed back away from the smoke discharge channel 32 including the smoke discharge vent 52, enabling damage to the breathable membranes 56 to be suppressed. Moreover, a configuration is enabled in which water does not infiltrate inside the smoke discharge channel 32 even suppose that the breathable membranes 56 were to be damaged.

Furthermore, there are two of the breathable membranes 56 provided in the present exemplary embodiment. Thus, even supposing one of the breathable membranes 56 were to be damaged, the pressure inside the storage battery pack 18 can be regulated by the other breathable membrane 56.

Furthermore, in the present exemplary embodiment, the breathable membranes 56 are configured, for example, by a material imparted with both waterproofing and breathable properties, such a GorTex (registered trademark). Thus in present exemplary embodiment, the breathable membranes 56 are accordingly able to suppressed the infiltration of water vapor appearing as dew outside the vehicle from ingressing to inside the storage battery pack 18.

Moreover, although the connector block 50 is provided to the rear end portion of the lower case 24 in the present exemplary embodiment, the connector block 50 is not necessarily separately provided. For example, the breathable membranes 56 and the wall 57 may be provided to the flange 25 formed to the rear end portion of the lower case 24.

Although the present invention has been described above by way of an exemplary embodiment, the present invention is not limited to such an exemplary embodiment, appropriate combinations of various modified examples with the exemplary embodiment may be employed, and obviously various embodiments may be implemented within a scope not departing from the spirit of the present invention.

## Claims

1. A vehicle rear section structure (14), comprising:
a pedestal (50) that is provided at a side of a rear end portion, in a vehicle front-rear direction, of a lower case (24) configuring a lower section of a battery case (18), and that is disposed further upward than a lower face of the lower case;
a breathable membrane (56) that is provided at the pedestal, the breathable membrane enabling communication between an interior of the battery case and an exterior of a vehicle and regulating pressure inside the battery case; and
a wall (57) that is provided at the pedestal, the wall being disposed further to a vehicle front side than the breathable membrane and projecting further upward than the breathable membrane.

2. The vehicle rear section structure of claim 1, wherein the wall is formed in a substantially circular arc shape in plan view so as to surround the breathable membrane from a front side in the vehicle front-rear direction and both sides in a vehicle width direction.

3. The vehicle rear section structure of claim 1, wherein the breathable membrane is provided further to an outer side in the vehicle width direction and an upper side in a vehicle height direction than a smoke discharge vent (52) for discharging smoke generated inside the battery case.

4. The vehicle rear section structure of claim 1, wherein a plurality of the breathable membranes is provided.

5. The vehicle rear section structure of claim 1, wherein the breathable membrane is configured from a material imparted with both waterproofing and breathable properties.
